# EUROPÄISCHE PATENTSCHRIFT

(11) **EP 0 959 692 B1**
(45) Veröffentlichungstag und Bekanntmachung des Hinweises auf die Patenterteilung: **02.07.2003**
(21) Anmeldenummer: 98907870.4
(22) Anmeldetag: 27.01.1998
(51) Int. Cl.: A23K 3/03, A23K 1/16

(54) **VERFAHREN ZUR HERSTELLUNG EINES FUTTERMITTELS**
METHOD FOR PRODUCING FODDER
PROCEDE DE FABRICATION DE FOURRAGE

(30) Priorität: 27.01.1997 DE 19702797
(43) Veröffentlichungstag der Anmeldung: 01.12.1999
(73) Patentinhaber: Mars, Inc., McLean, VA 22101-3883 (US)
(72) Erfinder: KÖHLER, Friedrich, D-27299 Langwedel (DE); STEINEBACH, Hans-Jürgen, D-27283 Verden (DE)
(74) Vertreter: Goddar, Heinz J., Dr.
(86) Internationale Anmeldenummer: DE9800252
(87) Internationale Veröffentlichungsnummer: WO98032342

(56) Entgegenhaltungen:
- EP-A- 0 049 690
- EP-A- 0 303 477
- WO-A-92/17071
- DD-A- 204 390
- DATABASE WPI Section Ch, Week 8821 Derwent Publications Ltd., London, GB; Class C03, AN 88-146001 XP002066988 & SU 1 347 921 A (BLAGOVESHCHENSK AGR)
- DATABASE WPI Section Ch, Week 8319 Derwent Publications Ltd., London, GB; Class C03, AN 83-45663K XP002066989 & JP 58 056 645 A (KYODO SHIRYO CO LTD)
- DATABASE WPI Section Ch, Week 8248 Derwent Publications Ltd., London, GB; Class C03, AN 82-03718J XP002066990 & JP 57 174 066 A (NIPPON PAINT CO LTD)
- J.C. DERBYSHIRE ET AL.: "Complete corn silage ration for milking cows" JOURNAL OF DAIRY SCIENCE., Bd. 51, Nr. 7, 1968, CHAPAIGN, ILLINOIS US, Seiten 1097-1100, XP002066987

## Beschreibung

Die Erfindung betrifft ein Verfahren zur Herstellung eines Futtermittels auf der Grundlage von Grünfutter, das einem Silierprozeß unterzogen wird.

Durch den Einsatz von Fetten kann die Energiedichte von Futtermitteln deutlich erhöht werden. Bisher wird davon in Form des sogenannten Auffettens von Kraftfuttermischungen Gebrauch gemacht. Derartige Kraftfuttermischungen werden oft als Ergänzung zu üblichem Silagefutter verfüttert. Das Silagefutter, das das Grundfutter für die Tiere darstellt, wird heute üblicherweise so hergestellt, daß Grünfutter, z.B. Grasschnitt, gegebenenfalls nach einer Anwelkphase von 1 bis 2 Tagen, mit einer entsprechenden Presse zu Rundballen verpreßt und anschließend luftdicht in Folie verpackt wird. Unter den dadurch erzeugten anaeroben Bedingungen laufen enzymatische Prozesse im Sinne einer kontrollierten Vergärung ab, die innerhalb einer Zeit von ca. 2 Monaten ein entsprechendes Silageprodukt liefern.

Durch die heute übliche getrennte Fütterung von Silagefutter und Ergänzungsfutter und dem damit einhergehenden erhöhten Lagerbedarf entsteht erhöhter Kosten- und Zeitaufwand.

Aus der EP 0 049 690 A1 ist die Verwendung von Phospholipiden als eine Schimmelpilzinhibierende Zusammensetzung für silierte Gräser bekannt. Diese Phospholipide pflanzlichen Ursprungs können allein oder in Kombination mit anderen Substanzen, zum Beispiel pflanzlichen Ölen, Polyethylenglykolestern von Fettsäuren sowie Glykosiden verwendet werden, welche den Gräsern nach einem Silierungsverfahren zugesetzt werden können.

Aus der SU-A-1347921 (Abstract) ist ein Verfahren bekannt, bei dem zu silierenden Pflanzenteilen ein Sauerstoff entziehendes Mittel zugesetzt wird.

Die JP-A-58056645 (Abstract) und die JP-A-59053806 B (Abstract) beschreiben ein Verfahren, bei dem faserige Substanzen pflanzlichen Ursprungs mit Bodensätzen aus Nahrungsmittelproduktion sowie zusätzlich mit Nährstoffen für Pflanzenfresser vermischt und in gasdichtem Material verpackt werden. Als faserige Substanzen werden vornehmlich Stroh, Rinde, Stamm und Samenhülsen als Pflanzenteile genannt, welche teilweise verholzt, nichtchlorophyll haltig, sowie teilweise durch mineralische Einlagerungen verhärtet sind.

Aus der WO-A-92/17071 ist ein Verfahren bekannt, bei welchem während oder vor der Ballenherstellung aus geerntetem Stroh ein Gemisch aus Harnstoff, geschützten Fetten und/oder Proteinen zugegeben wird, der Ballen mit dem Gemisch hermetisch in Plastik versiegelt wird und eine Reaktion zwischen dem pflanzlichen Futter und dem Harnstoff zur Erhöhung des Protein/Stärkegehaltes stattfindet, ohne daß das Fett/Protein in Mitleidenschaft gezogen wird. Fermentationsprozesse finden bei dem Verfahren nicht statt.

Die EP-A-0303477 beschreibt Nahrungsmittelzusammensetzungen, welche aus Nebenprodukten von Brennerei- bzw. Brauerei-Tätigkeit, siliertem organischen Material, Milchprodukten und/oder organischen Säuren bestehen. Siliertes organisches Material wird erst nach dem Silierprozeß mit weiteren Zusätzen vermischt.

In J. Dairy Science Vol. 51, Nr. 7, S. 1097-1100 wird ein Silofutter vorgestellt, das aus zu silierenden Maispflanzen besteht, denen vor der Fermentation Soja-Mehl zugefügt wird, um den Proteingehalt des Futters zu erhöhen.

Die DD-A-204390 beschreibt ein Futtermittel, das aus Silage, Stroh, Getreideschrot, Harnstoff und Mineralstoffgemisch besteht, welchem Futtermittel zusätzlich Tierkörperfett zugesetzt wird. Der Zusatz von Tierkörperfett erfolgt nach dem Silierprozeß.

Der Erfindung liegt daher die Aufgabe zugrunde, ein komplettes, d.h. nicht ergänzungsbedürftiges, Silagefuttermittel zur Verfügung zu stellen.

Erfindungsgemäß wird diese Aufgabe beim dem gattungsgemäßen Verfahren dadurch gelöst, daß dem Grünfutter vor dem Silierprozeß wenigstens eine öl- und/oder fetthaltige Substanz zugeordnet wird.

Bevorzugt wird als Ausgangsmaterial für den Silierprozeß angewelktes Gras verwendet.

Die bevorzugen öl- oder fetthaltigen Substanzen, die beim erfindungsgemäßen Verfahren eingesetzt werden können, sind Sojaöl, Rapsöl, Kokosnußöl, Palmöl oder Mischungen derselben oder entsprechende öl- und fetthaltige Preßkuchen oder Pellets.

In einer weiter bevorzugten Ausführungsform des erfindungsgemäßen Verfahrens kann vor dem Silierprozeß zusätzlich eine Mischung zum Grünfutter zugegeben werden, die Mineralstoffe, Spurenelemente und/oder Vitamine enthält.

Dabei kann bevorzugt eine wäßrige Lösung der Mineralstoffe, Spurenelemente und/oder Vitamine eingesetzt werden.

Die bisher durchgeführten Versuche haben überraschenderweise gezeigt, daß Öle oder fetthaltige Zusätze, die dem Grünfutter, wie z.B. Gras vor dem Silierprozeß zugesetzt wurden, sich gleichmäßig unter das Substrat mischen ließen. Eine ursprünglich befürchtete Entmischung war nicht zu beobachten.

Besonders bemerkenswert ist, daß der Zusatz der Öle und fetthaltigen Zusätze offensichtlich den Gärungsverlauf der Silage nicht wesentlich beeinflußt. Vielmehr können die Silagen sämtlich als gelungen betrachtet werden.

Die bisherigen Versuche lassen daher den Schluß zu, daß überraschenderweise bei der Silierung von Grünfutter der Zusatz von öl- und/oder fetthaltigen Substanzen möglich ist, ohne daß dabei der Erfolg der Konservierung beeinträchtigt wird. Vielmehr wird auf diese Weise ein aufgefettetes Grünfutter erhalten, das ein Komplettfutter für die Tiere darstellt, so daß eine Zufütterung von Kraftfuttermischungen nicht mehr erforderlich ist.

Das aufgefettete neuartige Futtermittel wird dabei von den Tieren auch ohne weiteres angenommen, d.h. Akzeptanzprobleme waren nicht zu beobachten. Das neuartige Futtermittel kann für verschiedene Tierarten geeignet sein. Obgleich zunächst hauptsächlich an den Einsatz bei Pferden oder Rindern gedacht ist, ist ein weiterreichender Einsatz für andere Tiere, die im wesentlichen auf der Basis von siliertem Grünfutter gefüttert werden, denkbar und möglich.

Weitere Merkmale und Vorteile der Erfindung ergeben sich aus der nachfolgenden detaillierteren Beschreibung der bisher durchgeführten Untersuchungen.

In einer ersten Untersuchungsreihe wurden zunächst Laborversuche durchgeführt. Dabei wurden vier verschiedene Öle bzw. öl- oder fetthaltige Substanzen eingesetzt, nämlich Rapsöl, Sojaöl, Rapspreßkuchen und sojaölhaltige Pellets. Diese wurden in drei Konzentrationsstufen mit frischem bzw. angewelktem Gras vermischt. In einer ergänzenden Versuchsreihe wurde auch der Zusatz einer Mineralstoffmischung, wie sie beispielsweise zur Ergänzung eines Futtermittels für Pferde geeignet wäre, untersucht.

Die Ausgangsmaterialien, d.h. das frische oder angewelkte Gras und die Öle oder öl- oder fetthaltigen Substanzen oder die Minerastoffmischung wurden in 1,5 Liter fassende Gläser gepreßt, luftdicht verschlossen und auf diese Weise bei einer konstanten Umgebungstemperatur von 25°C im Labormaßstab siliert. Der Verlauf der Gärung wurde durch zeitlich gestaffelte Öffnung nach 1, 3, 6 und 12 Monaten überwacht.

Dabei wurde überprüft, ob sich die Zusätze dem Substrat gleichmäßig beimengen lassen, welchen Einfluß die Zusätze auf den Verlauf der Silierung haben und wie die Zusätze selbst durch die Silierung beeinflußt werden.
- Als Substrat für alle Varianten wurde zum einen frisches (22 % TS), zum anderen angewelktes Gras (42 % TS) verwendet.

Nach 1, 3, 6 und 12 Monaten Lagerungsdauer wurde folgende Parameter untersucht:
- Durch Gewichtsbilanzen aller Versuchsansätze wurden die Gärverluste bestimmt
- Zum Zeitpunkt der Öffnung wurden die Silagen durch eine organoleptische Untersuchung bonitiert.
- Die Säuerung wurde durch Messung des pH-Wertes bestimmt.
- Der TS-Gehalt und die Gärverluste wurden bestimmt.
- Die relative Menge und das Fettsäurenmuster der in den Silagen enthaltenden Öle und Fette wurden bestimmt.

Nach 6 und 12 Monaten Lagerungsdauer wurden zusätzlich folgende Parameter untersucht:
- Die aerobe Stabilität (Verderblichkeit nach der Auslagerung) der Silagen wurden unter kontrollierten Bedingungen geprüft.
- Die Gärsäurenmuster wurden bestimmt.

Die Untersuchungen führten zu folgenden Ergebnissen:
- Die Öle und öl- oder fetthaltigen Zusätze ließen sich unter Versuchsbedingungen gleichmäßig unter das Substrat mischen. Eine Entmischung war nicht zu beobachten.
- Die Silagen sind insgesamt als gelungen zu betrachten. Insbesondere sind keine signifikanten Unterschiede im pH-Wert zu erkennen. Die Unterschiede im pH-Wert zwischen den Varianten mit frischem und angewelktem Gras als Substrat sind als normal zu bezeichnen und lassen sich durch den unterschiedlichen TS-Gehalt erklären. Den nachfolgenden Tabellen sind die im Versuch gemessenen pH-Werte zu entnehmen.

**Tabelle 1:**

| Ausgangsmaterial = frisches Gras | | | | | | | | | | | | | | | |
|---|---|---|---|---|---|---|---|---|---|---|---|---|---|---|---|
| | *Zusatz* | *ohne* | *Rapsöl* | | | *Sojaöl* | | | *Pellets* | | | *Rapspresskuchen* | | | *Mineralstoffmischung* |
| *Öffnung* | | | 3% | 6% | 9% | 3% | 6% | 9% | 10% | 20% | 30% | 10% | 20% | 30% | 2% |
| *Nach 1 Monat* | | *3,7* | *3,7* | *3,7* | *3,7* | *3,7* | *3,7* | *3,7* | *3,7* | *3,8* | *3,8* | *3,7* | *3,7* | *3,8* | *3,7* |
| *Nach 3 Monaten* | | *3,9* | *3,9* | *3,9* | *3,8* | *3,9* | *3,9* | *3,9* | *3,9* | *3,9* | *4,0* | *3,9* | *3,9* | *3,9* | *3,9* |
| *Nach 6 Monaten* | | *3,8* | *3,8* | *3,8* | *3,8* | *3,8* | *3,8* | *3,8* | *3,8* | *3,9* | *3,7* | *3,7* | *3,7* | *3,7* | *3,8* |

**Tabelle 2**

| Ausgangsmaterial = angewelktes Gras | | | | | | | | | | | | | | | |
|---|---|---|---|---|---|---|---|---|---|---|---|---|---|---|---|
| | *Zusatz* | *ohne* | *Rapsöl* | | | *Sojaöl* | | | *Pellets* | | | *Rapspresskuchen* | | | *Mineralstoffmischung* |
| *Öffnung* | | | 3% | 6% | 9% | 3% | 6% | 9% | 10% | 20% | 30% | 10% | 20% | 30% | 2% |
| *Nach 1 Monat* | | *4,6* | *4,6* | *4,6* | *4,6* | *4,6* | *4,6* | *4,6* | *4,6* | *4,7* | *4,8* | *4,6* | *4,7* | *4,7* | *4,7* |
| *Nach 3 Monaten* | | *4,6* | *4,5* | *4,6* | *4,6* | *4,6* | *4,6* | *4,6* | *4,6* | *4,6* | *4,7* | *4,6* | *4,6* | *4,6* | *4,7* |
| *Nach 6 Monaten* | | *4,4* | *4,4* | *4,4* | *4,4* | *4,4* | *4,4* | *4,4* | *4,4* | *4,5* | *4,6* | *4,5* | *4,4* | *4,4* | *4,5* |

- Die aerobe Stabilität der Silagen war hevorragend. Die gemessenen Werte ließen weder Einflüsse der beigemengten Zusätze noch der beigesetzten Mengen erkennen.
- Die Gärsäurenanalyse, die mit Hilfe der Gaschromatographie durchgeführt wurde, zeigte keine signifikanten Veränderungen durch die Zusätze.
- Die Untersuchung der Fettsäurenmuster lieferten die erwarteten Ergebnisse, d.h. im wesentlichen die Fettsäurenmuster der Zusätze, was bedeutet, daß durch den Silierprozeß keine signifikanten, inbesondere keine negativen Veränderungen festgestellt werden konnten.

Gegenwärtig laufen Versuche im Großmaßstab, um zu überprüfen, ob die Laborergebnisse sich auf die Silagetechnik, wie sie üblicherweise in der Landwirtschaft Anwendung findet, übertragbar ist. Dabei kann nach den ersten Zwischenergebnissen festgestellt werden, daß auch unter Feldbedingungen vergleichbar positive Ergebnisse erzielt werden.

Die in der vorstehenden Beschreibung, sowie in den Ansprüchen offenbarten Merkmale der Erfindung können sowohl einzeln als auch in beliebiger Komination für die Verwirklichung der Erfindung in ihren verschiedenen Ausführungsformen wesentlich sein.

## Patentansprüche

1. Verfahren zur Herstellung eines Futtermittels auf der Grundlage von Crrünfutter, das einem Silierprozeß unterzogen wird, **dadurch gekennzeichnet, daß** dem Grünfutter vor dem Silierprozeß wenigstens eine öl- und/oder fetthaltige Substanz zugesetzt wird.

2. Verfahren nach Anspruch 1, **dadurch gekennzeichnet, daß** als Ausgangsmaterial für den Silierprozeß angewelktes Gras verwendet wird.

3. Verfahren nach Anspruch 1 oder 2, **dadurch gekennzeichnet, daß** als öl- oder fetthaltige Substanzen Sojaöl, Rapsöl, Kokosnußöl, Palmöl oder eine Mischung derselben oder öl- und/oder fetthaltige Preßkuchen oder Pellets verwendet werden.

4. Verfahren nach einem der vorangehenden Ansprüche, **dadurch gekennzeichnet, daß** vor dem Silierprozeß zusätzlich eine Mischung zum Grünfutter zugegeben wird, die Mineralstoffe, Spurenelemente und/oder Vitamine enthält.

5. Verfahren nach Anspruch 4, **dadurch gekennzeichnet, daß** eine wäßrige Lösung der Mineralstoffe, Spurenelemente und/oder Vitamine eingesetzt wird.

## Claims

1. Process for the production of a feed based on green fodder, which has undergone a silaging process, **characterized in that**, prior to the silaging process, at least one oil-containing and/or fat-containing substance is added to the green fodder.

2. Process according to claim 1, **characterized in that** predried grass is used as the starting material for the silaging process.

3. Process according to claim 1 or 2, **characterized in that** as oil-containing or fat-containing substances use is made of soy oil, rape oil, coconut oil, palm oil or a mixture thereof, or oil-containing and/or fat-containing press cakes or pellets.

4. Process according to one of the preceding claims, **characterized in that**, prior to the silaging process, a mixture is added to the green fodder, which contains mineral substances, trace elements and/or vitamins.

5. Process according to claim 4, **characterized in that** use is made of an aqueous solution of the mineral substances, trace elements and/or vitamins.

## Revendications

1. Procédé de fabrication d'un fourrage basé sur du fourrage vert subissant un procédé d'ensilage, **caractérisé en ce que** le fourrage vert est enrichi d'au moins une substance contenant de l'huile et/ou de la matière grasse.

2. Procédé selon la revendication 1, **caractérisé en ce que** de l'herbe préfanée est utilisée comme matière première pour le procédé d'ensilage.

3. Procédé selon l'une des revendications 1 ou 2, **caractérisé en ce que** l'huile de soja, l'huile de colza, l'huile de noix de coco, l'huile de palme ou leurs mélanges ou bien les tourteaux correspondants contenant de l'huile et des matières grasses ou encore des pellets sont utilisés comme substances contenant de l'huile ou des matières grasses.

4. Procédé selon l'une quelconque des revendications précédentes, **caractérisé en ce qu'**un mélange contenant des minéraux, des oligo-éléments et/ou des vitamines a été ajouté en complément au fourrage vert avant le procédé d'ensilage.

5. Procédé selon la revendication 4, **caractérisé en ce qu'**une solution aqueuse de minéraux, oligo-éléments et/ou vitamines est employée.
